# EUROPÄISCHE PATENTSCHRIFT

(11) **EP 4 086 090 B1**
(45) Veröffentlichungstag und Bekanntmachung des Hinweises auf die Patenterteilung: **29.11.2023**
(21) Anmeldenummer: 21172486.9
(22) Anmeldetag: 06.05.2021
(51) Int. Cl.: B60G 3/14, B60G 7/00, B60K 17/04, B60K 17/30, B60K 17/32, B62D 61/10

(54) **AUTOMOBIL**
AUTOMOBILE
AUTOMOBILE

(43) Veröffentlichungstag der Anmeldung: 09.11.2022
(73) Patentinhaber: Blue Technologies BV, 4387 PK Vlissingen (NL)
(72) Erfinder: BENNER, Moritz, 61279 Grävenwiesbach (DE)
(74) Vertreter: Wunderlich & Heim Patentanwälte Partnerschaftsgesellschaft mbB

(56) Entgegenhaltungen:
- WO-A1-97/19827
- WO-A1-2018/172953
- US-A- 2 172 177

## Beschreibung

Die Erfindung betrifft ein Automobil mit einem Fahrzeuggrundkörper, einer Vorderradeinheit mit zwei Vorderrädern, welche lenkbar am Fahrzeuggrundkörper gelagert sind, und einer Hinterradeinheit mit mindestens zwei Hinterrädern, welche am Fahrzeuggrundkörper gelagert sind, wobei mindestens ein Rad mittels einer Radaufhängeschwinge, welche im Wesentlichen in der Längsrichtung des Automobils verläuft, auslenkbar in Richtung einer Hochachse am Fahrzeuggrundkörper gelagert ist, gemäß dem Oberbegriff des Anspruchs 1. Derartige gattungsbildende Automobile werden beispielsweise in den Druckschriften WO 97/19827 und WO 2018/172953 gezeigt.

Automobile mit einem derartigen Fahrwerk sind seit langem bekannt. Insbesondere Hinterräder an Automobilen werden über Radaufhängeschwingen, welche bei Ausrichtung in Längsrichtung auch als Längslenker bezeichnet werden, auslenkbar in einer Hochachse des Fahrzeuges gelagert. Bei den Längslenkern werden üblicherweise geschmiedete Stangen oder verschweißte Blechteile mit einer ausreichenden Steifigkeit eingesetzt. Bei einem Hinterradantrieb erfolgt die Drehmomentübertragung an das so aufgehängte Rad über eine quer gerichtete Gelenkwelle, welche einerseits mit einem zentralen Fahrzeugantrieb und andererseits mit dem drehbar gelagerten Rad in Drehmoment übertragende Verbindung steht. Die quer gerichtete Gelenkwelle verläuft etwa rechtwinkelig zum Längslenker.

Die Anordnung von Radaufhängungsschwinge und Gelenkwelle ist mit einem entsprechenden Platzbedarf verbunden. Radaufhängungsschwinge und Gelenkwelle stellen zusammen mit dem Rad eine ungefederte Masse dar, welche zum Erzielen eines möglichst guten Fahrverhaltens gering zu halten ist. Die Gelenkwelle benötigt Gummimanschetten zum Schutz der Gelenkverbindungen vor Schmutz und Wasser am Unterboden. Derartige Gummimanschetten sind verschleiß- und beschädigungsanfällig.

Der Erfindung liegt die **Aufgabe** zugrunde, ein Automobil mit einer besonders kompakten Radaufhängung mit effizienter Kraftübertragung anzugeben.

Nach der Erfindung wird diese Aufgabe durch ein Automobil mit dem Merkmal des Anspruchs 1 gelöst. Bevorzugte Ausführungsformen der Erfindung sind in den abhängigen Ansprüchen angegeben.

Das erfindungsgemäße Automobil ist dadurch gekennzeichnet, dass die Radaufhängeschwinge hohl mit einem inneren Hohlraum ausgebildet ist, in welchem eine Radantriebswelle angeordnet ist, welche einerseits mit einem Fahrzeugantrieb und andererseits mit dem zugehörigen Rad zur Drehmomentübertragung in Verbindung steht.

Ein Grundgedanke der Erfindung kann darin gesehen werden, eine Radantriebswelle, auch Gelenkwelle genannt, integriert in der Radaufhängeschwinge auszubilden. Hierzu wird die Radaufhängeschwinge hohl mit einem entsprechenden Hohlraum ausgebildet, welcher die Radantriebswelle aufnehmen kann. Die Radaufhängeschwinge verläuft dabei im Wesentlichen in Längsrichtung des Fahrzeuges und kann auch als Längslenker bezeichnet werden.

Durch die Anordnung der Radantriebswelle in der Radaufhängeschwinge, welche auch als Radaufhängungsarm bezeichnet werden kann, kann die separate Anordnung einer Gelenkwelle entfallen. Insgesamt wird ein besonders kompakter Aufbau erreicht, bei dem die Radantriebswelle geschützt in der Radaufhängeschwinge angeordnet ist. Die Radantriebswelle kann frei oder über Drehlager in der hohlen Radaufhängeschwinge gelagert werden. Hierdurch wird auch ein besonders guter Schutz der Radantriebswelle vor äußeren Einflüssen, insbesondere frei von Gummimanschetten, erreicht, was die Lebensdauer sowie notwendige Wartungszyklen positiv beeinflusst.

Insbesondere kann die Anordnung an einem oder vorzugsweise mehreren Hinterrädern eines Fahrzeuges angeordnet sein. Grundsätzlich ist eine entsprechende integrierte Ausbildung der Radaufhängeschwinge und einer Antriebswelle auch an Vorderrädern denkbar.

Eine bevorzugte Ausführungsform der Erfindung besteht darin, dass die in der Radaufhängeschwinge angeordnete Radantriebswelle einerseits ein erstes Winkelgetriebe und andererseits ein zweites Winkelgetriebe aufweist, dass das erste Winkelgetriebe mit einer quer gerichteten Antriebswelle in Drehmoment übertragender Verbindung steht, welche vom Fahrzeugantrieb angetrieben ist, und dass das zweite Winkelgetriebe mit einem Radantriebselement in Drehmoment übertragender Verbindung steht, welches insbesondere koaxial oder achsparallel zur Radachse ist. Somit kann die Radantriebswelle entsprechend der Radaufhängeschwinge im Wesentlichen in Längsrichtung des Fahrzeuges verlaufen, wobei antriebsseitig und abtriebsseitig ein entsprechendes Winkelgetriebe mit einem Winkel von ca. 90 Grad angeordnet ist. Die entsprechenden Winkelgetriebe können dabei in dem Hohlraum der Radaufhängeschwinge aufgenommen sein.

Grundsätzlich können die Winkelgetriebe in jeder geeigneten Form ausgebildet werden, beispielsweise als Kegelradgetriebe. Nach einer Ausbildungsform der Erfindung ist es besonders vorteilhaft, dass zumindest ein Winkelgetriebe ein Kardangelenk umfasst. Hierdurch ist ein kardanisches Winkelgetriebe gebildet, welches eine besonders verlustarme Drehmomentübertragung ermöglicht. Auch können Abweichungen von einem 90°-Winkel bei einem kardanischen Winkelgetriebe ohne weiteres vorgesehen werden.

Nach einer Ausführungsform der Erfindung ist es vorteilhaft, dass die Radaufhängeschwinge gegenüber dem Fahrzeuggrundkörper auslenkbar um eine Schwenkachse gelagert ist, welche in einer Querrichtung verläuft. Die Radaufhängschwinge ist somit zusammen mit dem Rad in Richtung der Hochachse des Fahrzeuges auslenkbar gelagert. Hierdurch kann ein besonders gutes Fahrverhalten des Automobils, welches vorzugsweise vier oder mehr Fahrzeugräder aufweist, erreicht werden.

Grundsätzlich kann die Radaufhängeschwinge in einer beliebigen Form gestaltet sein. Erfindungsgemäß weist die Radaufhängeschwinge einen rohrartigen Mittenholm und zwei daran angeordneten Winkelbuchsen auf. Der rohrartige Mittenholm erstreckt sich in einer Längsrichtung der Radaufhängeschwinge, während die beiden Winkelbuchsen mit ihren Buchsenachsen quer gerichtet sind. Mittenholm und Winkelbuchsen können einteilig oder mehrteilig, etwa als eine Schweißkonstruktion, ausgebildet sein.

Die Winkelbuchsen weisen zum Durchgang von Antriebs- oder Abtriebselementen quer gerichtete Durchgänge auf.

Grundsätzlich können verschiedene Federungs- und/oder Dämpfungssysteme an dem Automobil mit der erfindungsgemäßen Radaufhängeschwinge angeordnet sein. Besonders zweckmäßig ist es nach einer Weiterbildung der Erfindung, dass an der Radaufhängeschwinge ein Federungselement und ein Stoßdämpfer angelenkt sind, welcher insbesondere in einer Push-rod-Anordnung oder in einer McPherson-Anordnung ausgebildet ist. Hierdurch ergibt sich ein besonders gutes Federungsverhalten.

Besonders bevorzugt ist es dabei, dass der Stoßdämpfer mit einer einstellbaren Dämpfungscharacteristik ausgebildet ist, welche insbesondere magnetisch verstellbar ist. Eine Dämpfungscharacteristik kann dabei zu Beginn einer Fahrt voreingestellt werden und/oder durch eine Steuerung während der Fahrt abhängig von der Fahrsituation verstellt werden.

Eine weitere Verbesserung des Fahrverhaltens des erfindungsgemäßen Automobils kann dadurch erzielt werden, dass ein Radträger, an welchem das Rad drehbar gelagert ist, auslenkbar um eine Hochachse an der Radaufhängeschwinge gelagert ist, und dass eine Hinterradlenkung mit einem Stellglied vorgesehen ist, welches einerseits an der Radaufhängeschwinge und andererseits an dem Radträger gelagert und zur Einstellung eines Lenkwinkels ausgebildet ist. Mit dem grundsätzlich quer gerichteten Stellglied kann so eine Verschwenkung des Radträgers um eine im Wesentlichen vertikale Hochachse des Fahrzeuges um einige Winkelgrad eingestellt werden. So kann im Zusammenspiel mit einer grundsätzlich herkömmlichen Lenkung der Vorderräder das Lenkverhalten des Fahrzeuges durch Lenkung der Hinterräder positiv unterstützt werden.

Das Stellglied kann grundsätzlich jedes geeignete Stellglied sein, welches eine Verstellung des Radträgers um die Hochachse um einen Lenkwinkel von vorzugsweise zwischen 2° bis 10°, ermöglicht. Besonders vorteilhaft ist es nach einer Ausführungsvariante der Erfindung, dass das Stellglied ein elektro-mechanischer Aktuator ist. Es kann auch ein Stellzylinder, insbesondere ein Hydraulikzylinder vorgesehen sein.

Das Stellglied kann sehr kompakt ausgebildet und über eine Steuerung angesteuert und betätigt werden.

Erfindungsgemäß ist die Radaufhängeschwinge so ausgeführt, dass der Mittenholm der Radaufhängeschwinge zweiteilig mit einem ersten Holmteil und einem zweiten Holmteil ausgebildet ist, welche zueinander um eine Holmlängsachse verdrehbar sind, und dass über ein Einstellglied zur aktiven Sturzverstellung das zweite Holmteil mit dem Radträger gegenüber dem ersten Holmteil verdrehbar ist. Das erste Holmteil ist dabei am Fahrzeuggrundkörper, insbesondere dem Antrieb oder dem Getriebe des Automobils gelagert. Das zweite Holmteil mit dem Radträger kann über das Einstellglied um die Holmlängsachse um einige Winkelgrad verschwenkt und eingestellt werden, wodurch ein gewünschter Sturz des Fahrzeugrades eingestellt werden kann, insbesondere abhängig von einer Fahrsituation.

Besonders vorteilhaft ist es dabei, dass das Einstellglied ein selbsthemmendes Schneckengetriebe umfasst, welches abhängig von der Fahrsituation elektronisch ansteuerbar ist. Ein Schneckengetriebe stellt eine hohe Einstellgenauigkeit bei entsprechender Belastbarkeit für die Sturzeinstellung sicher. Das Schneckengetriebe ist über einen Elektromotor antreibbar, welcher elektronisch ansteuerbar ist.

Grundsätzlich können die einzelnen Einstellelemente vor dem Fahrtantritt fest eingestellt werden. Nach einer Weiterbildung der Erfindung ist es besonders zweckmäßig, dass eine Steuerung vorgesehen ist, durch welche der mindestens eine Stoßdämpfer, das mindestens eine Stellglied zur Hinterradlenkung und/oder das mindestens eine Stellglied zur aktiven Sturzverstellung abhängig von einer Fahrsituation ansteuerbar ist. Der Zustand des Fahrzeuges kann dabei über zahlreiche Sensoren am Automobil erfasst werden, insbesondere hinsichtlich Geschwindigkeit, Fahrtrichtung, Querbeschleunigungen und Fahrbahnzustand, so dass abhängig insbesondere von den Werten der entsprechenden Sensoren die Steuerung abhängig von der jeweiligen Fahrsituation geeignete Parameter für die einzelnen aktiv einstellbaren Einrichtungen und Komponenten vorgibt.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Draufsicht auf eine Fahrwerksanordnung bei einem ersten erfindungsgemäßen Automobil;
- Fig. 2: eine perspektivische Ansicht eines Hinterrades mit einer Radaufhängeschwinge, die für das Verständnis der Erfindung nützlich ist;
- Fig. 3: eine Querschnittsansicht durch die Radaufhängungsanordnung nach Fig. 2;
- Fig. 4: eine perspektivische Ansicht einer Radaufhängeanordnung nach einer Ausführungsform der Erfindung entsprechend Fig. 2
- Fig. 5: eine Querschnittsansicht durch die Radaufhängeanordnung nach Fig.4; und
- Fig. 6: eine weitere schematische Draufsicht auf eine Fahrwerksanordnung für ein weiteres erfindunsemäßes Automobil.

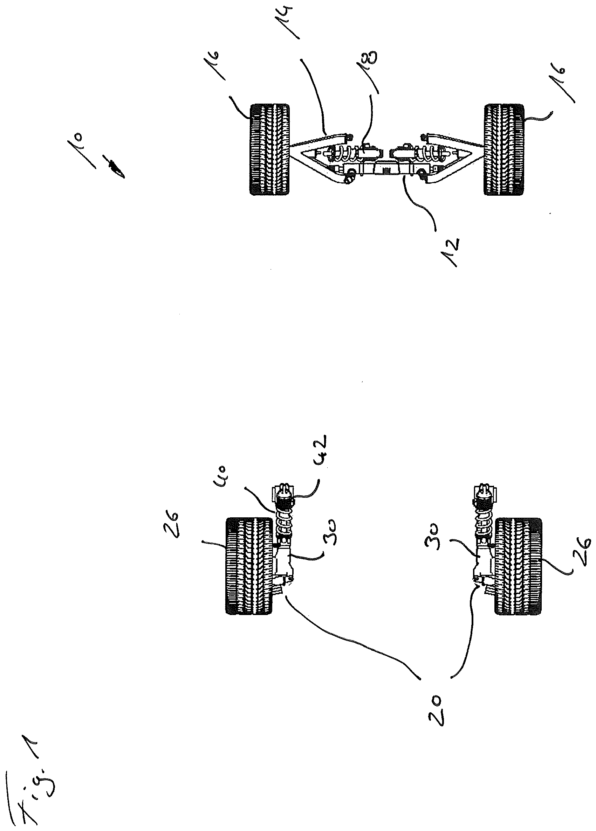

Eine Fahrwerksanordnung mit einer Vorderradeinheit 14 und einer Hinterradeinheit 20 für ein erfindungsgemäßes Automobil 10 ist stark schematisiert in Fig. 1 dargestellt. Von einem Fahrzeuggrundkörper 12 ist lediglich ein Teil im Bereich der Vorderradeinheit 14 gezeigt. Das Automobil 10 weist einen insbesondere für Sportwagen üblichen Fahrzeugaufbau auf. Die Vorderräder 16 der Vorderradeinheit 14 sind über einen Lenkmechanismus 18 über eine Lenkung von einem Fahrer lenkbar.

Die Hinterradeinheit 20 weist in dem Ausführungsbeispiel nach Fig. 1 zwei Hinterräder 26 auf, welche jeweils über eine Radaufhängeschwinge 30 am Fahrzeuggrundkörper 12 auslenkbar in Richtung einer Hochachse gelagert sind, welche senkrecht zur Zeichnungsebene verläuft. Die Radaufhängeschwingen 30 für jedes Hinterrad 26 sind über ein Federungselement 40 und einen Stoßdämpfer 42 in grundsätzlich bekannter Weise zusätzlich mit dem Fahrzeuggrundkörper 12 verbunden.

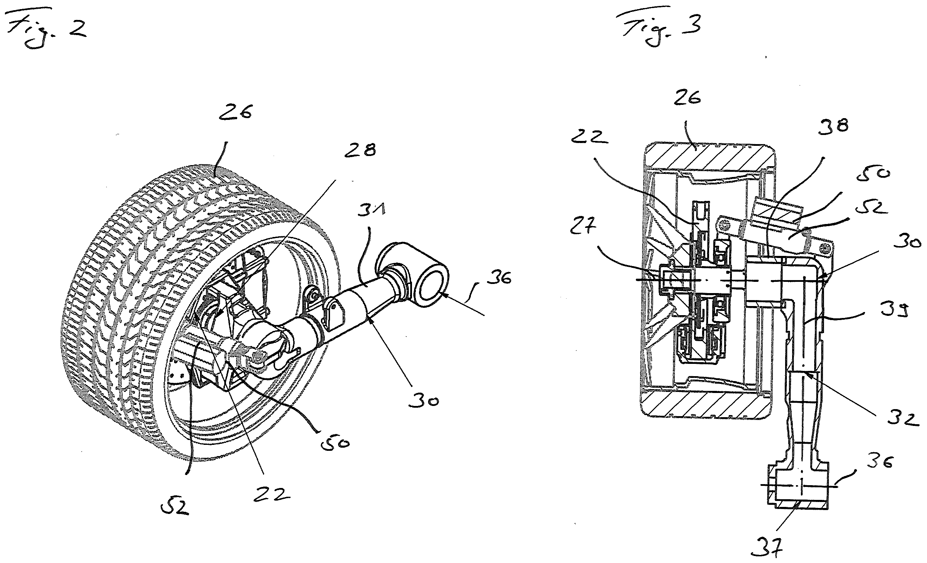

Die Radaufhängeanordnung mit der Radaufhängeschwinge 30 wird näher in Zusammenhang mit den Figuren 2 bis 3 erläutert. Die Radaufhängeschwinge 30 ist als ein Längslenker ausgebildet, welcher im Wesentlichen längs der Fahrzeuglängsrichtung verläuft. Gemäß der Erfindung ist die Radaufhängeschwinge 30 hohl mit einem Hohlraum 32 ausgebildet. Bei der für das Verständnis der Erfindung nützlichen Ausführungsform gemäß den Figuren 2 und 3 ist ein einstückiger Mittenholm 31 vorgesehen, welcher an seinen beiden Endbereichen in eine erste Winkelbuchse 37 und eine zweite Winkelbuchse 38 übergeht. Innerhalb des Hohlraums 32 der Radaufhängeschwinge 30 ist eine nicht dargestellte Radantriebswelle mit zwei Winkelgetrieben gelagert, über welche ein Drehmoment von einem Fahrzeugantrieb auf das jeweilige Hinterrade 26 übertragen wird.

Über die erste Winkelbuchse 37 ist die Radaufhängeschwinge 30 schwenkbar um eine Schwenkachse 36, die in Querrichtung des Fahrzeuges gerichtet ist, auslenkbar gegenüber dem Fahrzeuggrundkörper 12 gelagert. Die erste Winkelbuchse 37 weist an ihrer vom Rad 26 weg weisenden Seite eine Öffnung zum Eintritt eines Antriebselementes zu einem ersten vorzugsweise kardanischen Winkelgetriebe der Radantriebswelle auf. Über dieses erste Winkelgetriebe wird das Drehmoment des koaxial zur Schwingungsachse 36 gelagerten Antriebselementes etwa rechtwinklig auf die Radantriebswelle übertragen, welche innerhalb des Mittenholms 31 koaxial zur Holmlängsachse 39 angeordnet ist. Über ein zweites, ebenfalls nicht dargestelltes und vorzugsweise kardanisches Winkelgetriebe wird das Drehmoment im Bereich der zweiten Winkelbuchse 38 zu einem nicht dargestellten Abtriebselement umgeleitet, welches koaxial zur Radachse 27 des Hinterrades 26 verläuft. Somit wird über die Radantriebswelle durch die hohle Radaufhängeschwinge 30 das Drehmoment auf das Hinterrad 26 übertragen.

Das Hinterrad 26 ist in grundsätzlich bekannter Weise drehbar an einem Radträger 28 gelagert, welcher selbst an der Radaufhängeschwinge 30 gelagert ist. Innerhalb einer Felge des Hinterrades 26 kann in grundsätzlich bekannter Weise eine Bremseinrichtung 22 angeordnet sein, welche somit ebenfalls an der Radaufhängeschwinge 30 gelagert ist.

Gemäß einer bevorzugten Variante bei einem erfindungsgemäßen Automobil 10 ist gemäß den Figuren 2 und 3 eine Stelleinrichtung mit einem Stellglied 50 mit Stellzylinder 52 oder einem elektro-mechanischer Aktuator ausgebildet, über welchen der Radträger 28 des Hinterrades 26 über eine Hochachse des Automobils 10 zum Bewirken einer Hinterradlenkung um einige Winkelgrad ausgelenkt werden kann. Der Stellzylinder 52 ist dabei vorzugsweise ein Hydraulikzylinder.

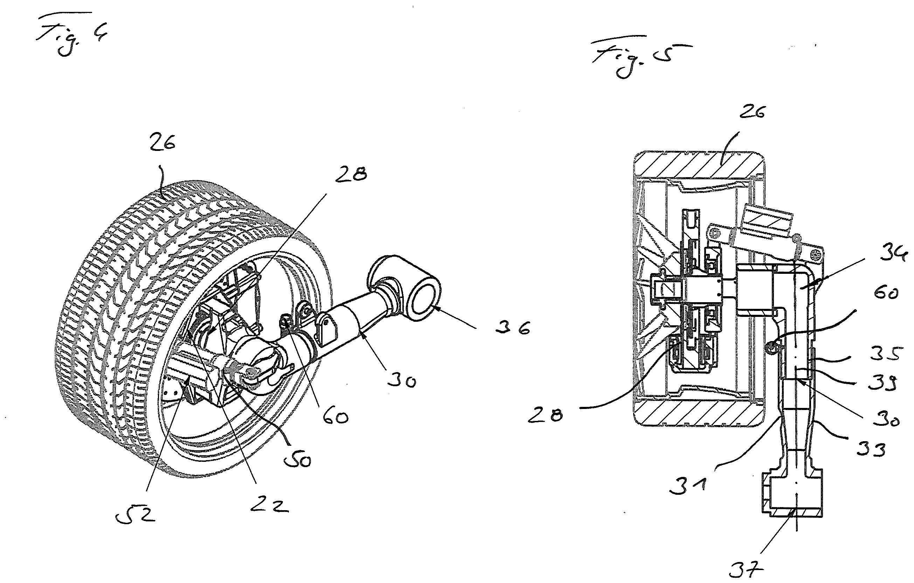

Gemäß den Figuren 4 und 5 ist eine erfindungsgemäße Ausführungsform dargestellt, wobei der grundsätzliche Aufbau der Radaufhängeanordnung der Anordnung gemäß den Figuren 2 und 3 entspricht. Im Unterschied zu der Ausgestaltung nach den Figuren 2 und 3 ist gemäß den Figuren 4 und 5 der Mittenholm 31 der Radaufhängeschwinge 30 zweiteilig mit einem ersten Holmteil 33 und einem zweiten Holmteil 34 ausgebildet.

An dem ersten Holmteil 33 ist die erste Winkelbuchse 37 fest angebracht, so dass das erste Holmteil 33 schwenkbar am Fahrzeuggrundkörper 12 gelagert ist. Das zweite Holmteil 34 weist einen rohrförmigen Lagerabschnitt 35 auf, welcher in einem entsprechenden Aufnahmeraum des ersten Holmteiles 33 drehbar um die Holmlängsachse 39 gelagert ist. An dem zweiten Holmteil 34 mit der zweiten Winkelbuchse 38 ist entsprechend dem vorausgegangen Ausführungsbeispiel der Radträger 28 mit dem Hinterrad 26 gelagert und angeordnet.

Durch die um die Holmlängsachse 39 verdrehbare Lagerung des zweiten Holmteiles 34 am ersten Holmteil 33 kann eine Verstellung des Sturzes des Rades 26 eingestellt werden. Hierzu ist an dem zweiten Holmteil 34 ein Einstellglied 60 angeordnet, welches insbesondere als ein Schneckengetriebe ausgebildet ist. Durch Ansteuerung des Schneckengetriebes kann eine Verdrehung des zweiten Holmteiles 34 um die Holmlängsachse 39 gegenüber dem ersten Holmteil 33 eingestellt und so ein Sturz des Hinterrades 26 verändert werden.

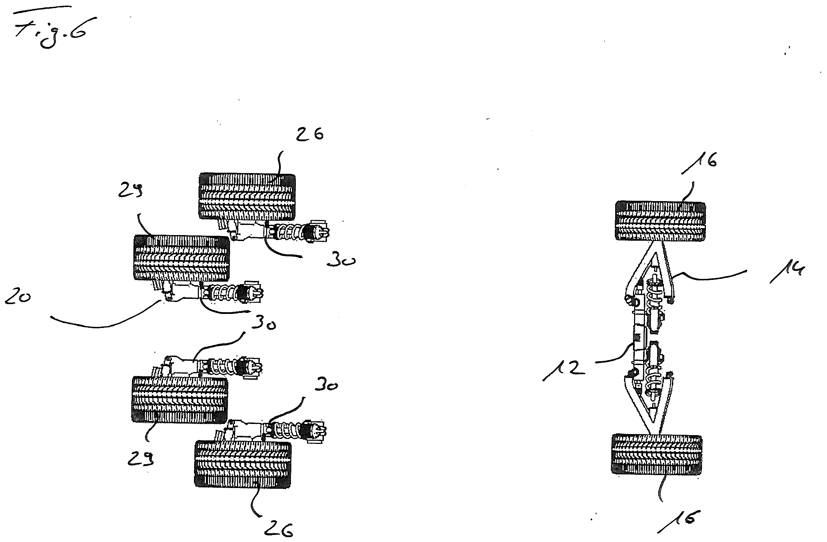

Durch das erfindungsgemäße Integrieren der Radantriebswelle in eine längs gerichtete Radaufhängeschwinge 30 der Hinterräder 26 wird eine insgesamt sehr kompakte Anordnung der Radaufhänge- und Radantriebsanordnung erreicht. Hierdurch wird es entsprechend der bevorzugten Ausgestaltung nach Fig. 6 ermöglicht, die Hinterradeinheit 20 nicht nur mit zwei äußeren Hinterrädern 26 auszubilden, sondern zusätzlich mit zwei inneren Hinterrädern 29 vorzusehen, welche in Querrichtung und in Längsrichtung versetzt zu den äußeren Hinterrädern 26 angeordnet und mit diesen angetrieben sind.

Die inneren Hinterräder 29 können dabei ebenso über die zuvor beschriebene Radaufhängeschwinge 30 mit einer inneren Radantriebswelle aufgehängt und zusätzlich drehend angetrieben sein. Durch diese Anordnung kann ein Drehmoment auf insgesamt mehr als zwei Hinterräder, im vorliegenden Fall auf vier Hinterräder, aufgebracht werden. Dies ermöglicht eine besonders gute Traktion auch beim Aufbringen großer Antriebsleistungen.

Zudem kann die Traktion noch dadurch erhöht werden, dass zwischen der Anordnung der inneren Hinterräder 29, welche gegenüber den äußeren Hinterrädern 26 in Fahrtrichtung nach hinten versetzt sind, aktiv eine Stützkraft gegenüber dem Fahrzeuggrundkörper 12 aufgebracht werden kann, mit welcher einer unerwünschten Nickbewegung des Fahrzeuggrundkörpers 12 beim Anfahren wirksam entgegengewirkt werden kann. Dies fördert weiter das Aufbringen auch hoher Antriebsleistungen auf die angetriebenen Hinterräder 26 bei hoher Fahrstabilität des Automobils, was insbesondere für Sportwägen mit hoher Antriebsleistung vorteilhaft und wünschenswert ist.

## Patentansprüche

1. Automobil mit
- einem Fahrzeuggrundkörper (12),
- einer Vorderradeinheit (14) mit zwei Vorderrädern (16), welche lenkbar am Fahrzeuggrundkörper (12) gelagert sind, und
- einer Hinterradeinheit (20) mit mindestens zwei Hinterrädern (26), welche am Fahrzeuggrundkörper (12) gelagert sind,
wobei mindestens ein Rad (16, 26) mittels einer Radaufhängeschwinge (30), welche im Wesentlichen in der Längsrichtung des Automobils (10) verläuft, auslenkbar in Richtung einer Hochachse am Fahrzeuggrundkörper (12) gelagert ist,
- wobei die Radaufhängeschwinge (30) hohl mit einem inneren Hohlraum (32) ausgebildet ist, in welchem eine Radantriebswelle angeordnet ist, welche einerseits mit einem Fahrzeugantrieb und andererseits mit dem zugehörigen Rad zur Drehmomentübertragung in Verbindung steht und
- wobei die Radaufhängeschwinge (30) einen rohrartigen Mittenholm (31) und zwei daran angeordnete Winkelbuchsen (37, 38) aufweist,
**dadurch gekennzeichnet,**
- **dass** der Mittenholm (31) der Radaufhängeschwinge (30) zweiteilig mit einem ersten Holmteil (33) und einem zweiten Holmteil (34) ausgebildet sind, welche zueinander um eine Holmlängsachse (39) verdrehbar sind, und
- **dass** über ein Einstellglied (60) zur aktiven Sturzverstellung das zweite Holmteil (34) mit dem Radträger (28) gegenüber dem ersten Holmteil (33) verdrehbar ist.

2. Automobil nach Anspruch 1,
**dadurch gekennzeichnet,**
**dass** die in der Radaufhängeschwinge (30) angeordnete Radantriebswelle einerseits ein erstes Winkelgetriebe und andererseits ein zweites Winkelgetriebe aufweist,
**dass** das erste Winkelgetriebe mit einer quer gerichteten Antriebswelle in drehmomentübertragender Verbindung steht, welche vom Fahrzeugantrieb angetrieben ist, und
**dass** das zweite Winkelgetriebe mit einem Radantriebselement in drehmomentübertragender Verbindung steht, welches insbesondere koaxial oder achsparallel zur Radachse ist.

3. Automobil nach Anspruch 1,
**dadurch gekennzeichnet,**
**dass** zumindest ein Winkelgetriebe ein Kardangelenk umfasst.

4. Automobil nach einem der Ansprüche 1 bis 3,
**dadurch gekennzeichnet,**
**dass** die Radaufhängeschwinge (30) gegenüber dem Fahrzeuggrundkörper (12) auslenkbar um eine Schwenkachse (36) gelagert ist, welche in einer Querrichtung verläuft.

5. Automobil nach einem der Ansprüche 1 bis 4,
**dadurch gekennzeichnet,**
**dass** an der Radaufhängeschwinge (30) ein Federungselement (40) und ein Stoßdämpfer (42) angelenkt sind, welcher insbesondere in einer Push-rod-Anordnung oder in einer McPherson-Anordnung ausgebildet ist.

6. Automobil nach Anspruch 5,
**dadurch gekennzeichnet,**
**dass** der Stoßdämpfer (42) mit einer einstellbaren Dämpfungscharakteristik ausgebildet ist, welche insbesondere magnetisch verstellbar ist.

7. Automobil nach einem der Ansprüche 1 bis 6,
**dadurch gekennzeichnet,**
**dass** ein Radträger (28), an welchem das Rad (26) drehbar gelagert ist, auslenkbar um ein Hochachse an der Radaufhängeschwinge (30) gelagert ist, und
**dass** eine Hinterradlenkung mit einem Stellglied (50) vorgesehen ist, welches einerseits an der Radaufhängeschwinge (30) und andererseits an dem Radträger (28) gelagert und zur Einstellung eines Lenkwinkels ausgebildet ist.

8. Automobil nach Anspruch 7,
**dadurch gekennzeichnet,**
**dass** das Stellglied (50) ein elektro-mechanischer Aktuator ist.

9. Automobil nach Anspruch 1 bis 8,
**dadurch gekennzeichnet,**
**dass** das Einstellglied (60) ein selbsthemmendes Schneckengetriebe umfasst, welches abhängig von der Fahrsituation elektronisch ansteuerbar ist.

10. Automobil nach einem der Ansprüche 6 bis 9,
**dadurch gekennzeichnet,**
**dass** eine Steuerung vorgesehen ist, durch welche der mindestens eine Stoßdämpfer (42), das mindestens eine Stellglied (50) zur Hinterradlenkung und/oder das mindestens eine Einstellglied (60) zur aktiven Sturzverstellung abhängig von einer Fahrsituation ansteuerbar ist.

## Claims

1. Automobile, comprising
- a vehicle main body (12),
- a front wheel unit (14) comprising two front wheels (16) which are steerably mounted on the vehicle main body (12), and
- a rear wheel unit (20) comprising at least two rear wheels (26), which are mounted on the vehicle main body (12),
wherein a least one wheel (16, 26) is mounted on the vehicle main body (12), so as to be deflectable in the direction of a vertical axis, by means of a wheel suspension swing arm (30) which extends substantially in the longitudinal direction of the automobile (10),
- wherein the wheel suspension swing arm (30) is formed so as to be hollow, having an inner cavity (32) in which a wheel drive shaft is arranged, which is connected on one side to a vehicle drive and on the other side to the associated wheel, for torque transmission, and
- wherein the wheel suspension swing arm (30) comprises a tube-like central holm (31) and two angle connectors (37, 38) arranged thereon,
**characterised in that**
- the central holm (31) of the wheel suspension swing arm (30) is formed in two parts, having a first holm part (33) and a second holm part (34), which can be twisted relative to one another about a holm longitudinal axis (39), and
- **in that** the second holm part (34), together with the wheel carrier (28), can be twisted relative to the first holm part (33) by means of an adjustment member (60) for active camber adjustment.

2. Automobile according to claim 1,
**characterised in that**
the wheel drive shaft arranged in the wheel suspension swing arm (30) comprise a first angular gear on one side, and a second angular gear on the other side, **in that** the first angular gear is connected, for torque transmission, to a transversely oriented drive shaft, which is driven by the vehicle drive, and
**in that** the second angular gear is connected, for torque transmission, to a wheel drive element, which is, in particular coaxial or axially parallel to the wheel axle.

3. Automobile according to claim 1,
**characterised in that**
at least one angular gear comprises a cardan joint.

4. Automobile according to any of claims 1 to 3,
**characterised in that**
the wheel suspension swing arm (30) is mounted so as to be deflectable about a swivel axis (36), relative to the vehicle main body (12), which swivel axis extends in a transverse direction.

5. Automobile according to any of claims 1 to 4,
**characterised in that**
a suspension element (40) and a shock absorber (42) are hinged to the wheel suspension swing arm (30), which shock absorber is in particular formed in a push-rod arrangement or in a McPherson arrangement.

6. Automobile according to claim 5,
**characterised in that**
the shock absorber (42) is designed having adjustable damping characteristics, which are in particular magnetically adjustable.

7. Automobile according to any of claims 1 to 6,
**characterised in that**
a wheel carrier (28), on which the wheel (26) is rotatably mounted, is mounted on the wheel suspension swing arm (30) so as to be deflectable about a vertical axis, and
**in that** a rear wheel steering system is provided with an actuator (50) which is mounted on the one hand on the wheel suspension swing arm (30) and on the other hand on the wheel carrier (28), and is designed for setting a steer angle.

8. Automobile according to claim 7,
**characterised in that**
the actuator (50) is an electro-mechanical actuator.

9. Automobile according to claims 1 to 8,
**characterised in that**
the adjustment member (60) comprises a self-locking worm gear which can be actuated electronically in a manner dependent on the driving situation.

10. Automobile according to any of claims 6 to 9,
**characterised in that**
a controller is provided, by means of which the at least one shock absorber (42), the at least one actuator (50) for rear wheel steering, and/or the at least one adjustment member (60) for active camber adjustment can be actuated depending on a driving situation.

## Revendications

1. °/ Automobile, comprenant
- un corps de base de véhicule (12),
- une unité de roue avant (14) comprenant deux roues avant (16) qui sont montées de façon à pouvoir être dirigées sur le corps de base de véhicule (12), et
- une unité de roue arrière (20) comprenant au moins deux roues arrière (26) qui sont montées sur le corps de base de véhicule (12),
- dans laquelle au moins une roue (16, 26) est montée sur le corps de base de véhicule (12) de façon à pouvoir être déviée dans la direction d'un axe vertical par l'intermédiaire d'un bras oscillant de suspension de roue (30) qui s'étend sensiblement dans la direction longitudinale de l'automobile (10),
- dans laquelle le bras oscillant de suspension de roue (30) est creux et comporte une cavité interne (32) à l'intérieur de laquelle un arbre d'entraînement de roue est agencé et est relié d'une part à un entraînement de véhicule et d'autre part à la roue correspondante pour la transmission d'un couple,
- dans laquelle le bras oscillant de suspension de roue (30) comprend un longeron central tubulaire (31) ainsi que deux douilles angulaires (37, 38) agencées sur celui-ci,
**caractérisée en ce que**
- le longeron central (31) du bras oscillant de suspension de roue (30) est réalisé en deux parties avec une première partie de longeron (33) et une seconde partie de longeron (34) qui peuvent être mises en rotation l'une par rapport à l'autre autour d'un axe longitudinal de longeron (39), et **en ce que**
- la seconde partie de longeron (34) peut être mise en rotation avec le support de roue (28) par rapport à la première partie de longeron (33) par l'intermédiaire d'un élément de réglage (60) dans le but de procéder à un réglage actif du carrossage

2. °/ Automobile selon la revendication 1, **caractérisée en ce que**
l'arbre d'entraînement de roue qui est agencé à l'intérieur du bras oscillant de suspension de roue (30) comprend d'une part un premier engrenage angulaire et d'autre part un second engrenage angulaire, **en ce que** le premier engrenage angulaire se trouve en liaison de transmission de couple de rotation avec un arbre d'entraînement orienté transversalement qui est entraîné par la propulsion du véhicule, et
**en ce que** le second engrenage angulaire se trouve en liaison de transmission de couple de rotation avec un élément d'entraînement de roue qui est en particulier coaxial ou parallèle axialement à l'axe de la roue.

3. °/ Automobile selon la revendication 1, **caractérisée en ce qu'**au moins un engrenage angulaire comprend un joint de cardan.

4. °/ Automobile selon l'une quelconque des revendications 1 à 3, **caractérisée en ce que** le bras oscillant de suspension de roue (30) est monté de façon à pouvoir être dévié par rapport au corps principal de véhicule (12) autour d'un axe de pivotement (36) qui s'étend dans une direction transversale.

5. °/ Automobile selon l'une quelconque des revendications 1 à 4, **caractérisée en ce qu'**un élément de suspension (40) et un amortisseur (42) sont articulés sur le bras oscillant de suspension de roue (30), en particulier sous la forme d'un agencement de type tige-poussoir ou d'un agencement de type McPherson.

6. °/ Automobile selon la revendication 5, **caractérisée en ce que** l'amortisseur (42) présente une caractéristique d'amortissement réglable, en particulier réglable magnétiquement.

7. °/ Automobile selon l'une quelconque des revendications 1 à 6, **caractérisée en ce que**
un support de roue (28) sur laquelle la roue (26) est montée de façon rotative est monté sur le bras oscillant de suspension de roue (30) de façon à pouvoir être dévié autour d'un axe vertical, et **en ce que** la roue (26) est montée sur le bras oscillant de suspension de roue (30), et **en ce que**
elle comprend une direction des roues arrière comprenant un vérin (50) qui est monté d'une part sur le bras oscillant de suspension de roue (30) et d'autre part sur le support de roue (28) et qui est conçu de manière à régler un angle de direction.

8. °/ Automobile selon la revendication 7, **caractérisée en ce que** l'élément de réglage (50) est un actionneur électromécanique.

9. °/ Automobile selon les revendications 1 à 8, **caractérisée en ce que** l'élément de réglage (60) comprend un engrenage à vis sans fin autobloquant qui peut être commandé électroniquement sur la base de la situation de conduite.

10. °/ Automobile selon l'une quelconque des revendications 6 à 9, **caractérisée en ce qu'**elle comprend un dispositif de commande par l'intermédiaire duquel ledit au moins un amortisseur (42), ledit au moins un élément de réglage (50) pour la direction des roues arrière et/ou ledit au moins un élément de réglage (60) pour le réglage actif du carrossage peuvent être commandés sur la base de la situation de conduite.
